# EUROPEAN PATENT APPLICATION

(11) **EP 4 343 091 A1**
(43) Date of publication of application: **27.03.2024**
(21) Application number: 22196543.7
(22) Date of filing: 20.09.2022
(51) Int. Cl.: E05B 81/76

(54) **DEVICE FOR IDENTIFYING A POSITION OF A VEHICLE HANDLE**

(71) Applicant: MINEBEA ACCESSSOLUTIONS ITALIA S.P.A., 10044 Pianezza (IT)
(72) Inventor: SAVANT, MARCO, 10044 PIANEZZA (IT); GUERIN, Anthony, 10044 PIANEZZA (IT); LABALESTRA, Antonio, 10044 PIANEZZA (IT); ANTONINO, Cannavò, 10044 PIANEZZA (IT); PERRIN, Christophe, 94000 Créteil (FR)
(74) Representative: Germain Maureau

(57) **Abstract**

Device (1) for identifying a position of a grip member (H) of a vehicle handle, the device (1) comprising a cam (B) rotatably movable inside the device (1) around an axis (X), said axis (X) being fixed relative to the grip member, said cam (B) being rotatably secured to a lever (L), which is rotatably movable around the axis (X), so that an angular position of the cam (B) around the axis (X) is directly related to an angular position of the lever (L) around the axis (X), said angular position of the lever (L) being also mechanically related to the position of the grip member (H), the device further comprising one or several switch(es) (A, A'), said one or several switch(es) (A, A') being secured to the handle (E) and complementary to a member (M, M') of the cam (B), so that the one or several switch(es) (A, A') is configured to be in electrical contact with the member (M, M') of the cam (B) when the angular position of the cam (B) is equal to one or more predetermined angular position(s) around the axis (X).

## Description

### TECHNICAL FIELD OF THE INVENTION

The present invention relates to the field of handles for vehicle doors, and in particular to devices for identifying a position of a handle.

### BACKGROUND

It is known, to identify a position of a handle for a vehicle door by using switches or electronic devices. In particular, when considering a flush handle, which is configured to be either in a flush position, or in a deployed position, or in any other position, it is known to identify the current flush handle position via a corresponding position of a rod configured to slide longitudinally inside the handle, said rod having a specific shape arranged to activate a specific switch, the specific switch depending on the position of the rod, the position of the rod being mechanically related, through a lever, to the position of the handle.

But the deviation and tolerances of each single part of such mechanical arrangement cause insufficient precision in the detection of the position of the handle.

Therefore, there is a need for improving the precision of the detection of the position of the handle.

### SUMMARY OF THE INVENTION

To that end, the present invention provides a device for identifying a position of a grip member of a vehicle handle, the device comprising a cam rotatably movable inside the device around an axis, said axis being fixed relative to the grip member, said cam being rotatably secured to a lever, which is rotatably movable around the axis, so that an angular position of the cam around the axis is directly related to an angular position of the lever around the axis, said angular position of the lever being also mechanically related to the position of the grip member, the device further comprising one or several switch(es), said one or several switch(es) being secured to the handle and complementary to a member of the cam, so that the one or several switch(es) is configured to be in electrical contact with the member of the cam when the angular position of the cam is equal to one or more predetermined angular position(s) around the axis.

According to these provisions, the tolerance chain to reach the predetermined angular position is reduced, and the precision is increased, all the more so as a placement of the device in the handle is determined in order to avoid deformations of said device.

According to an embodiment, the invention comprises one or more of the following features, alone or in any combination technically compatible.

According to an embodiment, the device further comprises a housing member configured to be secured to the handle, the cam and the one or several switch(es) being lodged inside the housing member, the one or several switch(es) being secured to the housing member.

According to these provisions, switches are centralized which has the advantage of focussing accuracy in one element only, i.e. the device, and to optimize the industrialisation flow with one fitting operation, one operation of sealing, and localisation of wire layout.

According to these provisions, the cam and the switch of the device are maintained and protected against the environment, and the device is a standalone device which may be mounted on the handle with proper centering and fixation.

According to an embodiment, the member of the cam is a portion of a surface of the cam.

According to an embodiment, the one or several switch(es) is protruding from a surface facing the portion of the surface of the cam.

According to an embodiment, the member is protruding from a surface of the cam.

According to an embodiment, the one or several switch(es) is one or more blades on a printed circuit board.

According to an embodiment, the cam is rotatably secured to the lever through a transmission axis which is rigid.

According to an embodiment, the cam is rotatably secured to the lever through a transmission axis which is resilient.

According to these provisions, alignment errors are absorbed, and tension is smoothed.

According to an embodiment, the device further comprises at least one electric wire connected to the one or several switch(es) at one end and configured to provide a signal at another end to an electrical control unit of the vehicle, the signal being representative of the position of the grip member of the vehicle handle of the vehicle.

According to another aspect, the invention provides a vehicle handle comprising a grip member and a device for identifying a position of the grip member according to any one of the embodiments described herein above.

According to another aspect, the invention provides a vehicle comprising a vehicle handle according to the above embodiment.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which the same reference refer to similar elements or to elements having similar functions, and in which:
[Fig. 1] represents a flush type vehicle handle in different positions, such as a flush position in figure 1a, a "deployed" position in figure 1b, an "open" position in figure 1c, and a "backup" position in figure 1d.
[Fig. 2] represents an embodiment of the device according to the invention.
[Fig. 3] represents a vehicle handle configured to receive the device according to the invention.
[Fig. 4] represents another embodiment of the device according to the invention.
[Fig. 5] represents another embodiment of the device according to the invention mounted on a vehicle handle.
[Fig. 6] represents a top view of the embodiment of the device of figure 5.
[Fig. 7] represents a top view of the embodiment of the device of figure 5, under the printed circuit board of this embodiment.

### DETAILED DESCRIPTION OF THE INVENTION ACCORDING TO AN EMBODIMENT

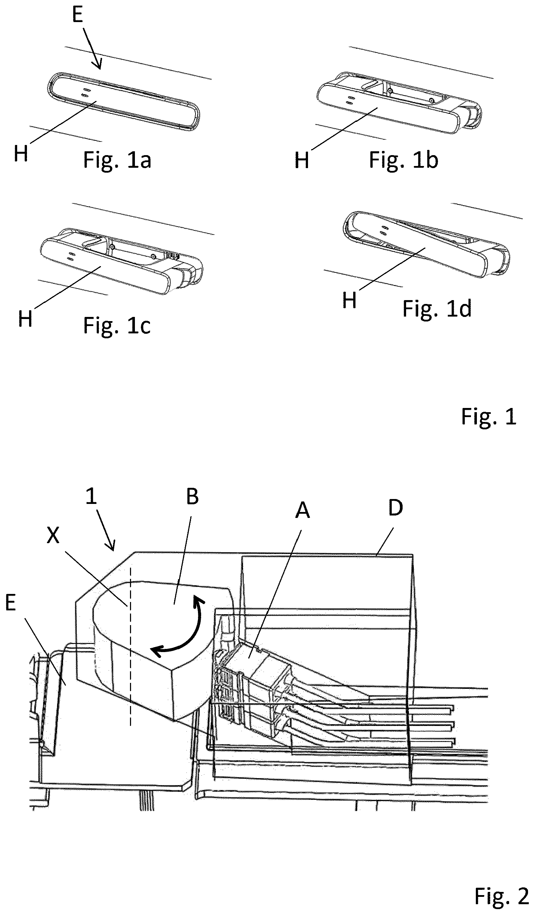

In figure 1, different typical handle positions of flush handle are illustrated : fig. 1a represents a position "flush" of the grip member of the flush handle, fig. 1b represents a position "deployed" of the grip member, and fig. 1c represents a position "open" of the grip member; the transition from one to the other of these successive positions is motorized and e-controlled, i.e. electronically controlled, while fig. 1d represents a backup position corresponding to a backup manual extraction of the grip member of the flush handle.

The positions of the grip member H are currently recognized by the activation of different switches through the movement of a rod having a specific shape to activate the proper switch. The signal of each single switch is sent to the vehicle or to an electronic control unit, which will recognize the handle position based on the signal, and will use this, for example, to stop or activate the actuator.

The invention consists in replacing this traditional activation of the switches, sliding away from the rod, by a system working in a rotational way, instead of the linear translation motion of the rod. Motion is transferred from a kinematic lever, directly from his axe of rotation; this reduces tolerance chain to reach target position. The handle consists of a housing in which at least one lever is arranged and a grip member which can be grasped by a user with his hand in order to open a door.

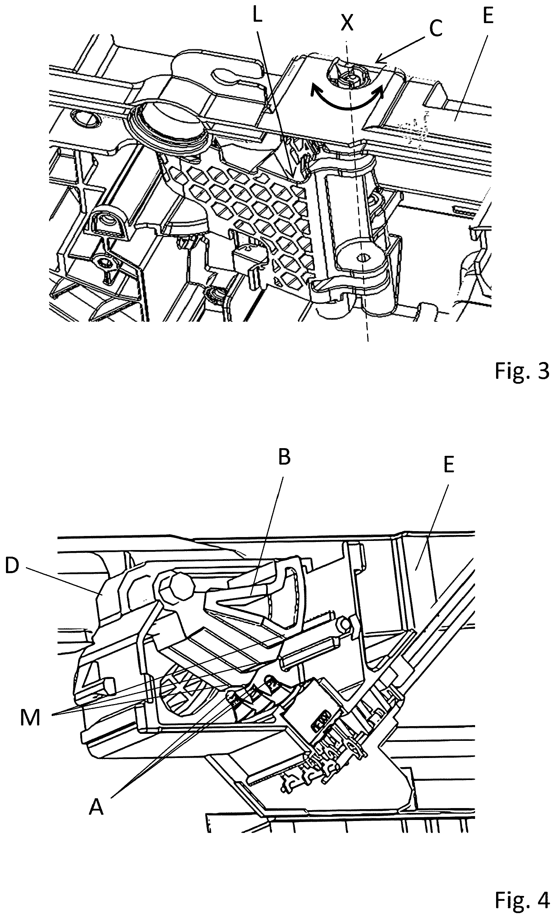

Thus, according to an embodiment illustrated in figures 2 and 3, the device 1 according to the invention comprises a cam B rotatably movable around an axis X, said axis X being fixed relative to a grip member H of a vehicle handle E; said cam B is rotatably secured to a lever L, which is rotatably movable around the axis X, so that an angular position of the cam B around the axis X is directly related to an angular position of the lever L around the axis X, said angular position of the lever L being also mechanically related to the position of the grip member H. The device further comprises one or several switch(es) A, A', said one or several switch(es) A, A' being secured to the handle E, especially to the housing of the handle E; the one or several switch(es) A, A' is configured to be in electrical contact with a complementary member M, M' of the cam B, when the angular position of the cam B is equal to one or more predetermined angular position(s) around the axis X.

According to these provisions, the tolerance chain to reach the predetermined angular position is reduced, and the precision is increased, all the more so as a placement of the device in the handle is determined in order to avoid deformations of said device.

The invention may be considered as splitted in different parts, or as in a single box including all elements. Thus, for example, the device 1 also comprises a housing member D, such as a box, configured to be secured to the handle E, the cam B and the one or several switch(es) A, A' being lodged inside the housing member D, the one or several switch(es) A, A' being secured to the housing member D.

According to these provisions, switches A, A' are centralized; this has the advantage of focussing accuracy in one element only, i.e. the device 1, and to optimize the industrialisation flow with one fitting operation, one operation of sealing, and localisation of wire layout.

According to these provisions, the cam B and the switch A, A' of the device 1 are maintained and protected against the environment, and the device 1 is a standalone device 1 which may be mounted on the handle E with proper centering and fixation.

In a particular example, the member M of the cam B is a portion of a surface of the cam B, as illustrated in figure 4. More particularly, the one or several switch(es) A is protruding from a surface facing the portion of the surface of the cam B.

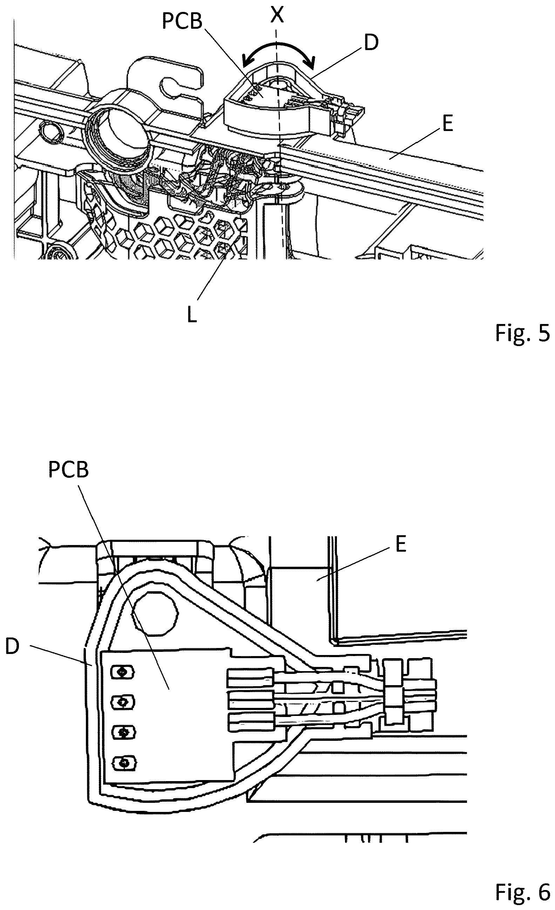

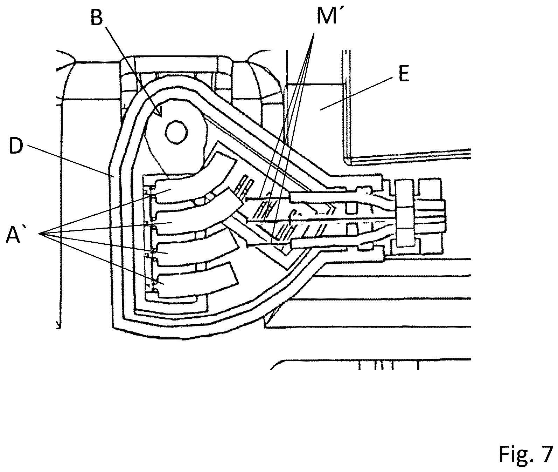

In another particular example, the one or several switch(es) A' is one or more blades A', as illustrated in figure 7, on a printed circuit board PCB as illustrated in figures 5, 6 and 7. More particularly, the member M' is protruding from a surface of the cam B, as illustrated in figure 7.

Preferably, as illustrated in figure 3, the cam B is rotatably secured to the lever L through a transmission axis C which is rigid.

More preferably, the transmission axis C which is resilient. Thus, alignment errors are absorbed, and tension is smoothed.

The device 1 may further comprise one or more electric wire(s) connected to the one or several switch(es) A, A' at one end and configured to provide a signal at another end to an electrical control unit of the vehicle, the signal being representative of the position of the grip member H of the vehicle handle E of the vehicle.

The invention also relates to a vehicle handle E comprising a grip member H and a device 1 for identifying a position of the grip member H, according to any one of the embodiments described herein above.

The invention also relates to a vehicle comprising a vehicle handle according to the embodiment described above.

## Claims

1. Device (1) for identifying a position of a grip member (H) of a vehicle handle (E), the device (1) comprising a cam (B) rotatably movable inside the device (1) around an axis (X), said axis (X) being fixed relative to the grip member (H), said cam (B) being rotatably secured to a lever (L), which is rotatably movable around the axis (X), so that an angular position of the cam (B) around the axis (X) is directly related to an angular position of the lever (L) around the axis (X), said angular position of the lever (L) being also mechanically related to the position of the grip member (H), the device further comprising one or several switch(es) (A, A'), said one or several switch(es) (A, A') being secured to the handle (E) and complementary to a member (M, M') of the cam (B), so that the one or several switch(es) (A, A') is configured to be in electrical contact with the member (M, M') of the cam (B) when the angular position of the cam (B) is equal to one or more predetermined angular position(s) around the axis (X).

2. Device (1) according to claim 1, the device (1) further comprising a housing member (D) configured to be secured to the handle (E), the cam (B) and the one or several switch(es) (A, A') being lodged inside the housing member (D), the one or several switch(es) (A, A') being secured to the housing member (D).

3. Device (1) according to anyone of claims 1 or 2, wherein the member (M) of the cam (B) is a portion of a surface of the cam (B).

4. Device (1) according to claim 3, wherein the one or several switch(es) (A) is protruding from a surface facing the portion of the surface of the cam (B).

5. Device (1) according to claim 1, wherein the member (M') is protruding from a surface of the cam (B).

6. Device (1) according to claim 5, wherein the one or several switch(es) (A') is one or more blades (A') on a printed circuit board (PCB).

7. Device (1) according to anyone of claims 1 to 6, wherein the cam (B) is rotatably secured to the lever (L) through a transmission axis (C) which is rigid.

8. Device (1) according to anyone of claims 1 to 6, wherein the cam (B) is rotatably secured to the lever (L) through a transmission axis (C) which is resilient.

9. Device (1) according to anyone of claims 1 to 8, further comprising at least one electric wire connected to the one or several switch(es) (A) at one end and configured to provide a signal at another end to an electrical control unit of the vehicle, the signal being representative of the position of the grip member (H) of the vehicle handle of the vehicle.

10. Vehicle handle comprising a grip member (H) and a device (1) for identifying a position of the grip member (H) according to any one of claims 1 to 9

11. Vehicle comprising a vehicle handle according to preceding claim.
